# EUROPEAN PATENT SPECIFICATION

(11) **EP 0 523 425 B1**
(45) Date of publication and mention of the grant of the patent: **24.01.1996**
(21) Application number: 92110870.0
(22) Date of filing: 26.06.1992
(51) Int. Cl.: G01N 35/10, G01N 35/04, B01L 9/00

(54) **Device for taking up and covering containers arranged in a line and filled with liquid to be analyzed**
Vorrichtung zur Aufnahme und Abdeckung von linearangeordneten, mit einer zu analysierenden Flüssigkeit gefüllten Behältern
Dispositif de support et de couverture pour récipients remplis d'un fluide d'analyse et rangés en colonne

(30) Priority: 16.07.1991 DE 4123528
(43) Date of publication of application: 20.01.1993
(73) Proprietor: Johnson & Johnson Clinical Diagnostics, Inc., Rochester New York 14650 (US); KODAK AKTIENGESELLSCHAFT, D-70323 Stuttgart (DE)
(72) Inventor: Würschum, Hans Peter, c/o Kodak Aktiengesellschaft, W-7000 Stuttgart 60 (DE); Heissler, Walter, c/o Kodak Aktiengesellschaft, W-7000 Stuttgart 60 (DE)
(74) Representative: Mercer, Christopher Paul

(56) References cited:
- EP-A- 0 299 661
- DE-A- 2 913 989
- DE-A- 3 346 517
- US-A- 4 455 280
- US-A- 4 785 677
- US-A- 5 026 526

## Description

The invention relates to a device comprising linearly arranged receptacles to receive containers filled with liquid to be analyzed and a cover means equipped with sealing means for covering the openings of the containers.

Various devices are known for retaining and moving containers filled with liquid to be analyzed which include a cover.

A retaining means for test tubes is known from DE-GM 18 23 845 having a single lid which covers all test tubes and is provided with a sealing means.

US-A-4,455,280 discloses an apparatus for preserving different kinds of reagents to be delivered in an automatic analyzer. The apparatus comprises a closed compartment (10) containing in its housing (11) a plurality of reagent vessels (14) placed in receptacles on a turntable (15). The vessels are covered by plugs (21) arranged via plug plates (22) on a detachable intermediate lid (20) having holes (20a) for said plugs to move through. The plugs can be moved via said plug plates from a horizontal covering to a vertical uncovering position by a single solenoid activated lever (23) located in an aspiration position, and will be moved back to the covering position, when said lever releases said plug plate, by coiled springs arranged between the plug plates and projections (26a,b) on said intermediate lid.

DE-A-33 46 517 dicloses a specific embodiment of two plugs associated by a plug plate arrangement for covering two vessels arranged side-by-side. The plugs can be moved via said plug plate arrangement from a horizontal covering to a vertical uncovering position by a single lever, and will be moved back to the covering position, when said lever releases said plug plate, by a coiled spring arranged between the plug plate and projections on an intermediate lid.

It is the object of the invention to provide a device of the generic type which permits easy insertion and removal of individual containers and enables failsafe operation in an automatic analyzer, in particular the automatic removal of liquids to be analyzed from the containers arranged in a processing station by means of an aspirating head. Also, evaporation, contamination or spilling of the liquids is to be reliably prevented. Moreover, a quick and reliable diagnosis is to be guaranteed at a high processing rate.

According to the invention, there is provided a device as defined in Claim 1. Essentially, the above object is attained in that
- each take-up means includes a lid associated with an opening of a container, and in that
- the lid can be pivoted from a covering position to an uncovering position.

The invention provides for the lid to be movably arranged on a retainer and for the retainer to be pivotable about a horizontally extending axis. The retainer includes an arm which can be manually actuated if the device is arranged outside the analyzer and which is actuated by an actuating element of an actuating means if the device is arranged within the processing station of the analyzer.

Furthermore, the retainer advantageously comprises a cam which is mounted concentrically to the axis and which is engaged by a hold-down element by means of which the lid is retained in its covering position.

Expediently, each receptacle is associated with a sensing element and a sensor is arranged in the area of the actuating means.

Advantageously, the lid consists of an elastic plastic material and is designed as a sealing means on its bottom surface.

Further features and advantages can be inferred from the description of an embodiment of the invention shown in the drawing and from the subclaims.

In the drawing
- Fig. 1: shows a top view of the device according to the invention installed in the processing station of an analyzer
- Fig. 2: shows a lateral view of the device according to Fig. 1 (cross-section along a line A-A in Fig. 1).

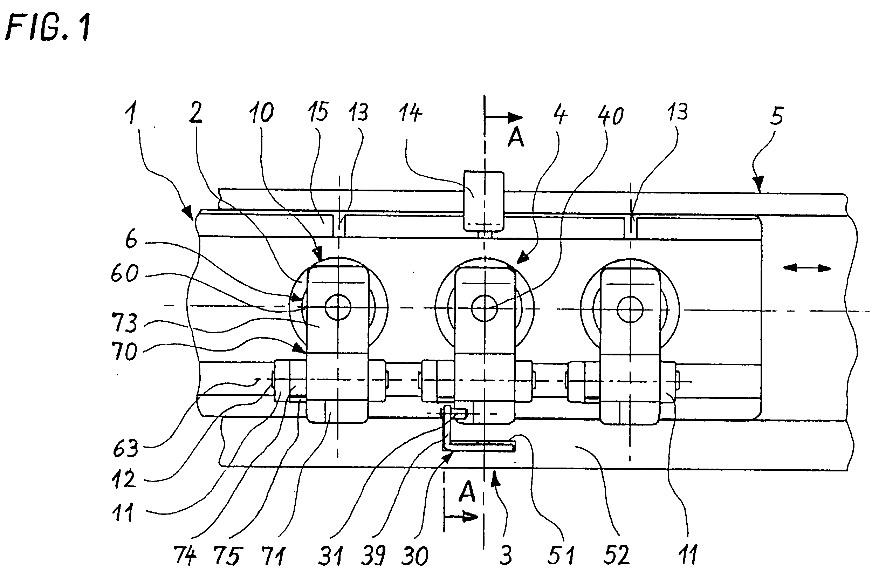

The device 1 shown in Fig.1 is arranged on a transport path 5 in the area of a processing station 4 of an analyzer.

Device 1 consists of a plurality of linearly arranged receptacles 10 to receive containers 2 filled with liquid to be analyzed.

Each receptacle 10 comprises a cover means 6 illustrated in its covering position and designed as a lid 60 arranged on an outrigger 73 of a retainer 70 and associated with the opening 20 of a container 2, said lid being pivotable about an axis of rotation 63 of a pin 12 extended along a longitudinal side of the device and supported in bearings 11 of a retainer.

On a longitudinal side of device 1 extending opposite to the bearings 11 each receptacle 10 is associated with a sensing mark 13 designed as a slot and arranged in a horizontally extending bar 15.

One of the receptacles 10 is aligned with an actuating means 3 arranged in processing station 4 and with an aspirating station 40 for liquids to be analyzed in which a sensor 14 designed as an optoelectric switch is arranged for detecting the sensing mark 13.

The actuating means 3 comprises an actuating element 30 including an actuating pin 31 projecting into the area of an arm 71 of retainer 70.

On one of its sides, retainer 70 includes a cam 74 which is concentrically arranged to the axis of rotation 63 and which is engaged by a hold-down element 75.

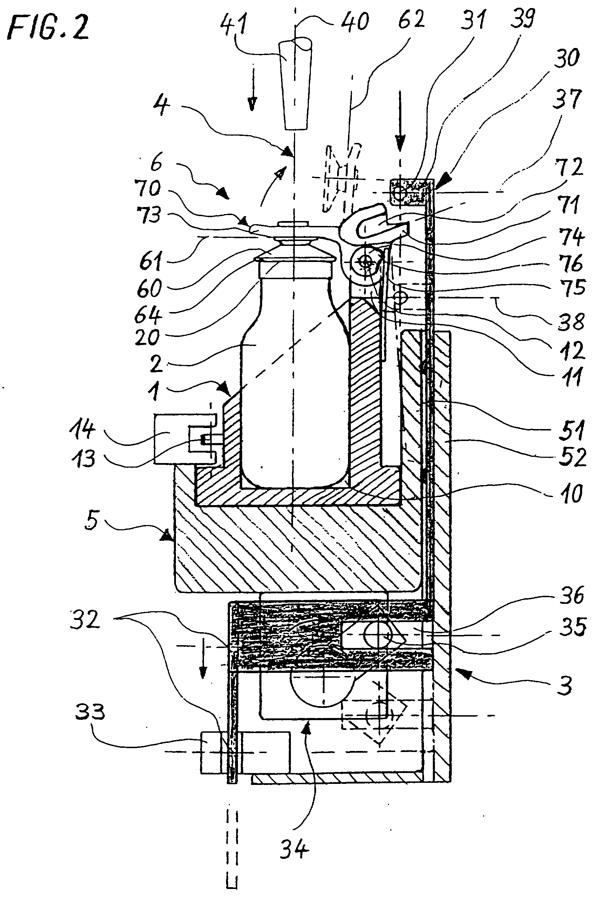

In Fig. 2, the lid 60 is shown both in its covering position 61 and in its uncovering position 62. Above the lid an aspirating head 41 for liquids to be analyzed is illustrated which is aligned with the center axis of container 2.

Beneath transport path 5 a microprocessor controlled, motordriven eccentric drive 34 of actuating means 3 is arranged with its drive pin 35 engaging with a horizontally protruding bifurcated lever arm 36 of actuating element 30.

Actuating element 30 which is designed as a flat slider is guided in a vertically extending channel 51 of a side wall 52 of transport path 5. In the area of the lower end of the actuating element 30 two sensing apertures 32 are arranged one above the other to cooperate with a sensor 33, said apertures being associated with the covering position 61 and the uncovering position 62 of the lid 60 or with the upper end position 37 and the lower end position 38 of the actuating element.

In its upper end position 37, an actuating pin 31 of actuating element 30 mounted to a retaining arm 39 is positioned above and outside a bifurcated guide means 72 of arm 71 of retainer 70, in which case the lid lies planarly on the opening 20 of a container 2 with the hold-down element 75 formed as a leaf spring engaging the extreme end of a flattened cam section 76 of cam 74.

In its lower end position 38, the actuating pin 31 rests on the lower prong of the fork of guide means 72, the lid 60 being positioned in a vertical uncovering position 62 pivoted by about 100 degrees from its previous position and the hold-down element 75 contacting the periphery of cam 74.

The device operates as follows:

Initially, the device 1 is equipped with containers 2 filled with liquid to be analyzed outside the analyzer. For this purpose, the cover means 6 is manually pivoted by actuating retainer 70 by means of its arm 71 and moving it together with lid 60 from its horizontal covering position 61 to its vertical uncovering position 62. Then the closure (not illustrated) of a container 2 is removed and the container placed in the receptacle 10 of device 1. Subsequently, retainer 70 is manually pivoted back to its covering position 61 so that the opening 20 of the container is covered by the lid (see Fig. 2).

This procedure is repeated until all receptacles 10 of device 1 are equipped with containers 2. In an input station (not illustrated) of the analyzer the device 1 is now placed on the horizontally extending transport path 5 and moved to a processing station 4 (shown in Figs. 1 and 2) by means of a microprocessor-controlled transport means (not illustrated). In this position, device 1 is aligned with a receptacle 10 in the area of the actuating means 3 or with a container 2 in the aspirating station 40 beneath the aspirating head 41 for liquids to be analyzed. Alignment is effected by means of sensor 14 arranged at the transport path 5 and the sensing marks 13 of device 1.

Then the actuating element 30 of the actuating means 3 is pulled down by means of the drive pin 35 of the microprocessor controlled, motor-driven eccentric drive 34. First, the lower sensing aperture 32 of the actuating element 30 is moved out of the sensing range of sensor 33. Then actuating pin 31 arranged at the upper end of the actuating element 30 hits the lower prong of guide means 72 of arm 71 and pivots retainer 70 together with lid 60 from its covering position 61 to its uncovering position 62. Actuating element 30 is moved downwards until it has reached the sensing range of sensor 33.

Then the aspirating head 41 is lowered into container 2 for removing liquid to be analyzed and, after an upward movement to its upper end position, moved to a further processing station (not illustrated).

Subsequently, eccentric drive 34 is started again and retainer 70 together with lid 60 is pivoted back to the covering position 61 by means of actuating element 30. Actuating pin 31 thereby hits first the upper prong of guide means 72 and pivots retainer 70 from its approximately vertical uncovering position 62 to its approximately horizontal covering position 61 before it releases guide means 72.

In this position, cam 74 of retainer 70 has pivoted about the axis of rotation 63 to the extent that cam section 76 contacts hold-down element 75 and thus forms a lever arm which by means of the spring force of hold-down element 75 produces a torque that urges retainer 70 into its covering position 61 and presses lid 60 onto the opening 20 of container 2 such that evaporation, contamination or spilling of the liquid to be analyzed within and outside the analyzer is reliably prevented.

## Claims

1. A device (1) comprising a plurality of receptacles (10) to receive containers (2) filled with liquid to be analyzed in an analyzer and a cover means (6) associated with each of said receptacles for covering the opening of said containers, each cover means (6) including a lid (60) with a sealing means (64) arranged on an associated actuating retainer (70) which can be pivoted about a horizontally extending axis of rotation (63) from a covering position (61) to an uncovering position (62), wherein said cover means is retained in its covering position (61) by a hold-down element (75); said device being **characterized by**
a cam (74) mounted concentrically to the axis of rotation (63) on said retainer (70), and
said hold-down element (75) engaging said cam (74) such that said cover means (6) can be retained either in said covering a uncovering positions (61, 62) by said cam and hold-down element (74,75).

2. Device according to Claim 1, characterized in that said cam (74) comprises
a cam section (76) having an extreme end on the periphery of said cam (74) contacted by said hold-down element (75) when the retainer (70) of said cover means (6) is pivoted in the covering position (61), to produce a torque that urges said retainer into its horizontal covering position (61) and presses the lid (60) onto the opening (20) of the container (2), and
a flattened periphery section which is contacted by said hold-down element when said retainer (70) is pivoted in the uncovering position (62), to retain said lid (60) in its vertical uncovering position (62).

3. Device according to Claim 1 or 2, characterized in that said hold-down element (75) is formed as a leaf spring.

4. Device according to Claim 1 or 2, characterized in that said retainer (70) of the cover means (6) comprises an arm (71) by which said retainer can be pivoted manually if the device (1) is outside the analyzer or by actuating means (3) arranged in an aspirating station (40) if the device is placed in the analyzer.

5. Device according to Claim 4, characterized in that said arm (71) comprises a fork-shaped guide means (72) having a lower and upper prong, and between said prongs an actuating pin (31) of said actuating means (3) is positioned for pivoting said retainer (70).

6. Device according to Claim 4 or 5, characterized by said actuating means (3) comprising a microprocessor-controlled and motor-driven eccentric drive (4) for moving upwards and downwards said actuating pin (31) mounted on an actuating element (30).

7. Device according to Claim 4 or 6, characterized by said actuating means (3) comprising
sensing means (32,33) for sensing said covering and uncovering positions (61,62) of said retainer (70), and
sensing means (14) for detecting a sensing mark (13) associated with each receptacle.

8. Device according to Claim 1 or 2, characterized in that said lid (60) consists of a resilient plastic material and is designed as a sealing means (64) on its bottom surface.

## Patentansprüche

1. Vorrichtung (1) mit einer Anzahl von Aufnahmeeinrichtungen (10) zur Aufnahme von Behältern (2), die mit einer zu analysierenden Flüssigkeit gefüllt sind, in einem Analysegerät, und mit einer Abdeckeinrichtung (6), die jeder der Aufnahmeeinrichtungen zum Abdecken der Öffnungen der Behälter zugeordnet sind, wobei jede Abdeckeinrichtung (6) einen Deckel (60) mit einer Abdichteinrichtung (64) aufweist, der an einem zugehörigen Betätigungs-Halter (70) angebracht ist, der um eine sich horizontal erstreckende Drehachse (63) aus einer abdeckenden Stellung (61) in eine nicht abdeckende Stellung (62) geschwenkt werden kann, wobei die Abdeckeinrichtung von einem Niederhalteelement (75) in ihrer abdeckenden Stellung (61) gehalten wird; **gekennzeichnet** durch
ein Nockenelement (74), das konzentrisch zur Drehachse (63) am Halter (70) angebracht ist, wobei
das Niederhalteelement (75) derart mit dem Nockenelement (74) in Eingriff steht, daß die Abdeckeinrichtung (6) durch das Nockenelement und das Niederhalteelement (74, 75) in der abdeckenden und auch in der nicht abdeckenden Stellung (61, 62) gehalten wird.

2. Vorrichtung nach Anspruch 1, dadurch gekennzeichnet, daß das Nockenelement (74) umfaßt
einen Nockenabschnitt (76) mit einem äußeren Ende am Umfang des Nockenelements (74), das mit dem Niederhalteelement (75) in Kontakt steht, wenn der Halter (70) der Abdeckeinrichtung (6) in die abdeckende Stellung (61) geschwenkt ist, um eine Drehkraft zu erzeugen, die den Halter in seine horizontale abdeckende Stellung (61) drängt und den Deckel (60) auf die Öffnung (20) des Behälters (2) drückt, und
einen abgeflachten Umfangsabschnitt, der mit dem Niederhalteelement in Kontakt steht, wenn der Halter (70) in die nicht abdeckende Stellung (62) geschwenkt ist, um den Deckel (60) in seiner vertikalen, nicht abdeckenden Stellung (52) zu halten.

3. Vorrichtung nach Anspruch 1 oder 2, dadurch gekennzeichnet, daß das Niederhalteelement (75) als Blattfeder ausgebildet ist.

4. Vorrichtung nach Anspruch 1 oder 2, dadurch gekennzeichnet, daß der Halter (70) der Abdeckeinrichtung (6) einen Arm (71) aufweist, mit dem der Halter manuell, wenn sich die Vorrichtung (1) außerhalb des Analysegeräts befindet, oder durch eine Betätigungseinrichtung (3) in einer Ansaugstation (40) geschwenkt werden kann, wenn sich die Vorrichtung im Analysegerät befindet.

5. Vorrichtung nach Anspruch 4, dadurch gekennzeichnet, daß der Arm (71) eine gabelförmige Führungseinrichtung (72) mit einem unteren und einem oberen Zacken aufweist, wobei sich zum Schwenken des Halters (70) zwischen den Zacken ein Betätigungsstift (31) der Betätigungseinrichtung (3) befindet.

6. Vorrichtung nach Anspruch 4 oder 5, dadurch gekennzeichnet, daß die Betätigungseinrichtung (3) einen mikroprozessorgesteuerten und motorbetriebenen Exzenterantrieb (4) zum Aufwärts- und Abwärtsbewegen des am Betätigungselement (30) angebrachten Betätigungsstifts (31) aufweist.

7. Vorrichtung nach Anspruch 4 oder 5, dadurch gekennzeichnet, daß die Betätigungseinrichtung (3) umfaßt
eine Sensoreinrichtung (32, 33) zum Erfassen der abdeckenden und der nicht abdeckenden Stellung (61, 62) des Halters (70), und
eine Sensoreinrichtung (14) zum Erfassen einer Sensormarkierung (13), die jeder Aufnahmeeinrichtung zugeordnet ist.

8. Vorrichtung nach Anspruch 1 oder 2, dadurch gekennzeichnet, daß der Deckel (60) aus einem elastischen Kunststoffmaterial besteht und an seiner Unterseite als Abdichteinrichtung (64) ausgebildet ist.

## Revendications

1. Dispositif (1) comportant une pluralité de réceptacles (10) destinés à recevoir des récipients (2) remplis avec un liquide devant être analysé dans un analyseur, et des moyens de couverture (6) associés à chacun desdits supports afin de couvrir l'ouverture desdits récipients, chaque moyen de couverture (6) comprenant un couvercle (60) muni de moyens d'étanchéité (64) aménagés sur un support d'actionnement (70) associé, qui peut pivoter autour d'un axe de rotation (63) s'étendant à l'horizontale, depuis une position de couverture (61) jusqu'à une position d'ouverture (62), dans lequel lesdits moyens de couverture sont maintenus dans leur position de couverture (61) par une pièce de maintien en place (75); ledit dispositif étant caractérisé par
une came (74) montée de manière concentrique par rapport à l'axe de rotation (63) sur ledit support (70), et en ce que
ladite pièce de maintien en place (75) s'engage dans ladite came (74) de telle sorte que lesdits moyens de couverture (6) peuvent être maintenus dans lesdites positions soit de couverture soit d'ouverture (61, 62) au moyen desdites came et pièce de maintien en place (74, 75).

2. Dispositif selon la revendication 1, caractérisé en ce que ladite came (74) comprend
une portion de came (76) ayant une fin d'extrémité à la périphérie de ladite came (74) entrant en contact avec ladite pièce de maintien en place (75) lorsque le support (70) desdits moyens de couverture (6) pivote dans la position de couverture (61), afin de produire un couple de torsion qui pousse ledit support dans sa position horizontale de couverture (61) et presse le couvercle (60) sur l'ouverture (20) du récipient (2), et
une portion périphérique aplatie, qui entre en contact avec ladite pièce de maintien en place lorsque ledit support (70) est pivoté dans la position d'ouverture (62), afin de maintenir ledit couvercle (60) dans sa position verticale d'ouverture (62).

3. Dispositif selon la revendication 1 ou 2, caractérisé en ce que ladite pièce de maintien en place (75) a la forme d'un ressort à lame.

4. Dispositif selon la revendication 1 ou 2, caractérisé en ce que ledit support (70) des moyens de couverture (6) comprend un bras (71) au moyen duquel ledit support peut être pivoté manuellement, si le dispositif (1) se trouve en dehors de l'analyseur, ou par des moyens d'actionnement (3) aménagés dans un poste d'aspiration (40), si le dispositif est placé dans l'analyseur.

5. Dispositif selon la revendication 4, caractérisé en ce que ledit bras (71) comprend un dispositif de guidage (72) en forme de fourche, présentant une branche basse et une branche élevée, et entre lesdites branches, un tourillon d'actionnement (31) desdits moyens d'actionnement (3) est placé de manière à faire pivoter ledit support (70).

6. Dispositif selon la revendication 4 ou 5, caractérisé en ce que lesdits système d'actionnement (3) comportent un mécanisme d'entraînement excentré (4) actionné par un moteur et contrôlé par microprocesseur, afin de déplacer vers le haut et vers le bas ledit tourillon d'actionnement (31) monté sur une pièce d'actionnement (30) .

7. Dispositif selon la revendication 4 ou 6, caractérisé en ce que lesdits moyens d'actionnement (3) comprennent
des moyens de détection (32, 33) afin de déterminer lesdites positions de couverture et d'ouverture (61, 62) dudit support (70), et
des moyens de détection (14) afin de déterminer une marque (13) associée à chaque réceptacle.

8. Dispositif selon la revendication 1 ou 2, caractérisé en ce que ledit couvercle (60) est fabriqué dans un matériau plastique résilient et est conçu en tant que moyen d'étanchéité (64) sur sa surface inférieure.
